# FASCICULE DE BREVET EUROPEEN

(11) **EP 3 008 796 B1**
(45) Date de publication et mention de la délivrance du brevet: **19.07.2017**
(21) Numéro de dépôt: 14735610.9
(22) Date de dépôt: 11.06.2014
(51) Int. Cl.: H02K 3/32, H02K 15/02

(54) **ROTOR DE MACHINE ELECTRIQUE TOURNANTE EQUIPE D'UN ISOLANT D'UN BOBINAGE D'EXCITATION COMPRENANT AU MOINS UN PETALE MODIFIE POUR LE PASSAGE D'UN AIMANT LORS DU MONTAGE**
ROTOR EINER ELEKTRISCHEN DREHENDEN MASCHINE MIT EINEM ISOLATOR EINER ERREGERWICKLUNG MIT MINDESTENS EINER MODIFIZIERTEN LAMELLE FÜR DEN DURCHGANG EINES MAGNETS WÄHREND DES ZUSAMMENBAUS
ROTOR OF AN ELECTRICAL ROTATING MACHINE PROVIDED WITH AN INSULATOR OF AN EXCITATION WINDING, COMPRISING AT LEAST ONE MODIFIED PETAL FOR THE PASSAGE OF A MAGNET DURING ASSEMBLY

(30) Priorité: 14.06.2013 FR 1355541
(43) Date de publication de la demande: 20.04.2016
(73) Titulaire: Valeo Equipements Electriques Moteur, 94046 Créteil Cedex (FR)
(72) Inventeur: DELPLACE, David, F-62176 Camiers (FR)
(86) Numéro de dépôt international: PCT/FR2014/051404
(87) Numéro de publication internationale: WO 2014/199074

(56) Documents cités:
- WO-A1-2011/058254
- FR-A1- 2 591 399
- US-A- 5 539 265
- US-A1- 2008 061 651

## Description

### Domaine de l'invention

La présente invention concerne de manière générale les machines électriques tournantes.

Plus précisément, l'invention concerne des machines tournantes de type alternateur ou alterno-démarreur, mises en oeuvre dans les véhicules automobiles.

Et plus précisément encore, l'invention concerne les machines tournantes dont le rotor comprend des griffes, des dents et des aimants, par exemple des aimants permanents comme des aimants en terre rare et/ou en ferrite.

### Etat de la technique

Les aimants disposés entre deux dents servent à empêcher les fuites du flux magnétique entre les pôles magnétiques en forme de dents. Il a en effet été constaté qu'une partie importante du flux magnétique créé par le bobinage du rotor passait par des chemins de fuite au lieu de traverser l'entrefer de la machine et d'aller provoquer l'induction désirée dans les pôles du stator. A cet effet, des solutions de l'art antérieur prévoient que des aimants soient placés préférentiellement par paire entre au moins certaines des dents consécutives des roues polaires soit par des agrafes ou tout autre support disposé sur la dent et destiné à maintenir au moins un aimant dans une position déterminée, soit grâce à deux gorges réalisées sur un des bords latéraux des dents entre lesquelles l'aimant est situé.

Dans le domaine, on connaît déjà un rotor de machine électrique tournante, notamment pour un alternateur ou un alterno-démarreur de véhicule automobile, comportant un axe de symétrie axiale (X-X), deux roues polaires comprenant chacune un flasque portant des saillies prolongées par des dents d'orientation axiale dirigées vers le flasque de l'autre roue polaire, un noyau entre les flasques des roues polaires, un isolant d'un bobinage d'excitation monté sur le noyau, un bobinage, et au moins un aimant montés entre deux dents adjacentes appartenant à l'une et l'autre des roues polaires, dans lequel l'isolant comporte un manchon, monté sur le noyau, une joue avant et une joue arrière à chacune des extrémités du moyeu, au moins une de ces joues portant une pluralité de pétales saillants destinés à coopérer avec la périphérie interne inclinée d'une dent, au moins un pétale parmi ladite pluralité de pétales présentant un contour globalement trapézoïdal, ledit pétale étant saillant globalement radialement à l'état libre en étant incliné axialement en direction de la seconde roue polaire et présentant une grande base se raccordant à la périphérie externe de la joue, une petite base configurée pour venir en contact avec ladite périphérie interne de ladite dent, au moins deux pans opposés raccordant lesdites grande base et petite base.

Un tel rotor de machine électrique tournante est divulgué dans WO2011058254.

Le procédé de montage selon un enseignement ressortant de WO2011058254 comporte les étapes suivantes :
- un isolant équipé d'un bobinage d'excitation est monté sur un demi-noyau d'une première roue polaire,
- au moins un aimant est monté sur une dent de ladite première roue polaire,
- ledit pétale est retourné et replié progressivement par contact avec la périphérie interne inclinée d'une dent de la seconde roue polaire faisant passer ledit pétale d'une position déployée à une position repliée.

En utilisant un tel procédé de montage d'un rotor, il a été constaté que lors de de l'étape de montage durant laquelle ledit pétale est retourné et replié progressivement par contact avec la périphérie inclinée de la dent de la seconde roue polaire, le passage dudit pétale d'une position déployée à une position repliée était rendu difficile du fait du montage préalable dudit aimant sur la dent de la première roue polaire. Lors de ce montage préalable mentionné ci-dessus, les aimants sont simplement déposés et maintenu par aimantation sur la première roue polaire.

Ainsi, lors de l'assemblage de la deuxième roue polaire le pétale qui est progressivement plié vers le bobinage d'excitation. risque d'entraîner avec lui ces aimants. Les aimants interpolaires sont alors déplacés si bien que le rotor obtenu à la fin du procédé doit être mis au rebus.

En d'autres termes, lorsque ledit pétale est retourné et replié, il existe au moins une position intermédiaire du pétale suivant laquelle ledit pétale est à proximité immédiate voire croise une arrête dudit aimant de la première roue polaire. On entend ici par position intermédiaire, la position dans laquelle est ledit pétale est sur le point de franchir l'aimant équipant la première roue polaire sans l'avoir complètement franchi.

Cette position intermédiaire est donc une position comprise entre une première position relative à un état déployé dudit pétale et une seconde position relative à un état replié dudit pétale.

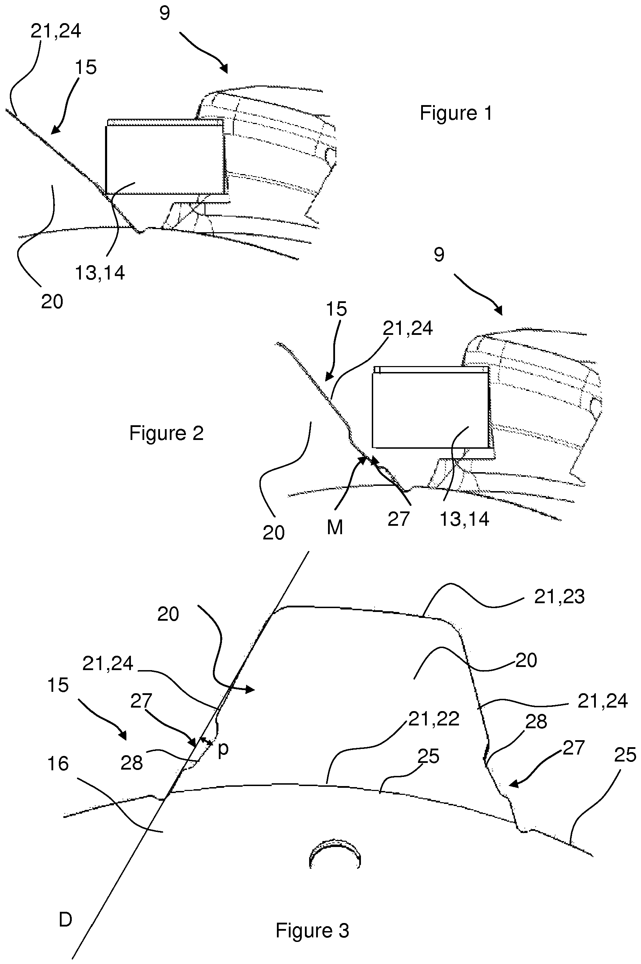

Comme on peut le voir sur la figure 1 représentant un art antérieur, ledit aimant équipant la première roue polaire est - en position intermédiaire - très proche dudit pétale voire touche ledit pétale. Cette proximité immédiate affecte les coûts de fabrication. En effet, dans ces conditions, lors du montage ledit aimant peut détériorer le pétale en le rencontrant.

Afin d'y remédier, il est par exemple possible d'équiper le rotor de pétales ayant des dimensions réduites ou bien même de réduire la taille des aimants. Ces solutions ne sont pas satisfaisantes car la première citée réduit l'isolation électrique de la bobine et la seconde favorise des chemins de fuite de flux magnétique.

### Objet de l'invention

Dans ce contexte, le problème ici posé est de proposer un rotor de machine électrique tournante, qui soit de construction simple et permettant pour un montage simplifié du rotor - préférentiellement un montage dans lequel un aimant est préalablement monté sur une dent d'une roue polaire - et d'en faciliter sa mise en oeuvre. Plus particulièrement, le problème visé par la présente invention est de réduire les coûts de fabrication liés à la détérioration des composants équipant le rotor (notamment l'aimant et le pétale) lors du montage, tout en optimisant l'isolation électrique de la bobine et en entravant les fuites de flux magnétique.

L'invention a pour objet un rotor de machine électrique tournante, notamment pour un alternateur ou un alterno-démarreur de véhicule automobile, comprenant deux roues polaires, un bobinage d'excitation muni d'un isolant et au moins un ensemble magnétique placé entre les deux roues polaires munies chacune de dents, ledit isolant comprenant une pluralité de pétales.

Selon une caractéristique générale, l'un au moins desdits pétales présente un évidement latéral pour permettre le passage d'un desdits ensembles magnétiques lors du montage des deux roues polaires.

Par exemple, au moins un pan du pétale parmi lesdits au moins deux pans présente ledit évidement latéral.

Un tel rotor permet de pallier aux inconvénients précités lors du montage.

La présente solution offre un bon compromis. Cet évidement latéral situé sur au moins un pétale permet avantageusement le passage de l'aimant lorsque ledit pétale est dans sa position intermédiaire, tout en permettant la conservation des dimensions de l'aimant et du pétale. Le montage d'un rotor dans lequel un aimant est préalablement monté sur une dent d'un rotor devient possible et aisé, en s'affranchissant de la détérioration des composants tels que l'aimant ou le pétale qui pourrait nécessiter le démontage complet du rotor, voire sa mise au rebut.

Selon un mode de réalisation, l'un de ladite pluralité de pétales est saillant et étant destiné à coopérer avec la périphérie interne inclinée d'une dent de la deuxième roue polaire.

Selon un mode de réalisation, le rotor comporte un axe de rotation et lesdites deux roues polaires comprennent chacune un flasque portant des saillies prolongées par lesdites dents d'orientation axiale dirigées vers le flasque de l'autre roue polaire, et ledit au moins un ensemble magnétique étant monté entre deux dents adjacentes appartenant à l'une et l'autre des roues polaires.

Selon un mode de réalisation, le rotor comprend un noyau entre les roues polaires et ledit isolant étant monté sur le noyau.

Selon une caractéristique de ce mode de réalisation, l'isolant comporte un moyeu, monté sur le noyau, une joue avant et une joue arrière à chacune des extrémités du moyeu, au moins une de ces joues portant ladite pluralité de pétales.

Selon un autre mode de réalisation, le au moins un pétale présente un contour globalement trapézoïdal, ledit contour comprenant deux pans opposés non parallèles qui s'étendent vers l'extérieur de l'isolant, ledit évidement latéral étant aménagé dans un de ces deux pans.

Selon une caractéristique de cet autre mode de réalisation, l'évidement présente une forme longitudinale ayant une direction, ladite direction étant plus inclinée que la direction du pan avec laquelle elle forme un angle compris entre 1 °et 20°.

Cette forme est particulièrement adaptée pour que l'aimant évite le pétale qui passe d'une position déployée à inclinée. Lors du mouvement d'inclinaison, l'évidement équipant le pétale s'incline progressivement et concomitamment à l'inclinaison du pétale. De cette manière, la forme longitudinale facilite le passage du pétale à proximité de l'ensemble magnétique lors de l'inclinaison du pétale.

En d'autres termes, lors du pliage du pétale, l'arrête de l'ensemble magnétique va se déplacer par rapport audit évidement. Ce déplacement va d'un point intérieur (plus proche de la joue) de l'évidement vers un point extérieur (plus éloigné de la joue, plus excentré), ce déplacement n'étant pas parallèle au pan du pétale mais plus incliné de sorte que le point intérieur est moins profond que le point extérieur.

Ainsi, dans le cas d'un évidement dont la direction est parallèle au pan, il faut prévoir sur toute la longueur de l'évidement une profondeur adaptée pour que le point extérieur mentionné ci-dessus ne touche pas l'arrête de l'ensemble magnétique alors que cette profondeur n'est pas nécessaire pour éviter le pétale lorsque par exemple l'arrête est situé sur ledit point intérieur. Ainsi, la surface de l'évidement est importante, ce qui implique des problèmes d'isolation électromagnétique.

Au contraire, en ayant une direction d'évidement plus incliné que le pan, c'est-à-dire qui suit le déplacement relatif de l'arrête par rapport à l'évidement on obtient une profondeur variable qui est toujours adapté à la position relative de l'arrête. Ainsi, la surface de l'évidement est moins importante, ce qui limite les problèmes d'isolation électromagnétique.

Selon une autre caractéristique de cet autre mode de réalisation, le contour présente une grande base se raccordant à la périphérie externe de la joue et une petite base configurée pour venir en contact avec ladite périphérie interne de ladite dent, lesdits deux pans raccordant lesdites grande base et petite base.

Selon une caractéristique supplémentaire, ledit évidement est plus proche de la grande base que de la petite base.

Un telle solution offre une meilleure isolation électrique du côté de la tête de la dent et est particulièrement adapté à l'agencement spatial des composants tels que l'aimant et le pétale lorsque le pétale est dans sa position intermédiaire.

Selon une autre caractéristique supplémentaire, ladite grande base est de plus grande dimension qu'une largeur d'une racine de la dent qui lui est adjacente.

Cette solution offre une meilleure couverture de l'isolation électrique de la dent à l'endroit de la racine de la dent, en particulier à l'endroit des bords de la périphérie interne inclinée.

Selon un mode de réalisation, un pétale de ladite pluralité de pétales étant saillant globalement radialement à l'état libre est plaqué sur ladite bobine d'excitation lorsque lesdites deux roues polaires sont montées.

Selon un mode de réalisation, l'évidement présente une forme longitudinale ayant une direction et présente les dimensions suivantes :
une longueur L comprise entre 2,5 et 5 mm, suivant la direction de l'évidement,
en son milieu, une profondeur comprise entre 0,3 et 1,5 mm.

La présente solution offre un bon compromis entre l'isolation électrique qui est impacté si l'évidement est trop important et l'évitement de l'élément magnétique. Ces dimensions offrent un bon compromis et sont particulièrement adaptés aux alternateurs et alterno-démarreurs appliqués au domaine de l'automobile. Ces dimensions sont considéré comme particulièrement pertinentes eu égard à la forme de l'aimant, la forme du pétale et au mouvement d'inclinaison dudit pétale.

Selon un mode de réalisation, ledit évidement fait face à un desdits ensembles magnétiques.

Selon un mode de réalisation, ledit évidement présente une certaine longueur de sorte qu'une certaine section d'un desdits ensemble magnétique puisse être introduite dans l'évidement.

On peut prévoir que ledit évidement présente une certaine longueur de sorte qu'une certaine section d'un desdits ensemble magnétique puisse être introduite dans l'évidement.

En effet, il est possible qu'une section de l'ensemble magnétique présentant une longueur soit introduite dans l'évidement lors du montage de la deuxième roue polaire. Il faut donc que la longueur de l'évidement soit supérieure à cette section pour que l'élment magnétique puisse être évité par le pétale.

Avantageusement, ledit évidement présente une certaine longueur de sorte qu'il fasse face lors de son pliage à une arrête d'un desdits ensembles magnétiques.

En effet, lors du pliage du pétale, le point de l'évidement qui est le plus proche de l'arrête de l'ensemble magnétique se déplace de la base de l'évidement vers l'extérieur du pan. Il faut donc que la longueur de l'évidement soit supérieure à la course du point de l'évidement qui est le plus proche de l'arrête.

En plus de présenter une certaine profondeur, l'évidement présente avantageusement une certaine longueur qui vérifie les deux critères, celui de la section de l'élément magnétique et celui de la course du point de l'évidement le plus proche de l'arrête.

Dans un autre mode de réalisation, ladite grande base est de plus grande dimension qu'une largeur d'une racine de la dent qui lui est adjacente.

Suivant un autre objet de l'invention, est également visé un procédé de montage d'un rotor de machine électrique tournante, notamment pour un alternateur ou un alterno-démarreur de véhicule automobile, comprenant deux roues polaires munies de dents, un bobinage d'excitation muni d'un isolant et au moins un ensemble magnétique placé entre les deux roues polaires, ledit isolant comprenant une pluralité de pétales, comportant les étapes suivantes :
- montage de l'isolant muni des pétales sur la première roue polaire sur laquelle est également monté ledit ensemble magnétique
- montage de la seconde roue polaire sur la première roue polaire, au cours duquel le pétale est retourné et replié progressivement par contact avec la périphérie interne inclinée d'une dent de la seconde roue polaire faisant passer ledit au moins un pétale d'une position déployée à une position repliée.

Selon une caractéristique générale de ce procédé, l'ensemble magnétique est mis en regard de l'évidement de sorte que lors de son pliage le pétale n'accroche pas l'ensemble magnétique.

Selon un mode de mise en oeuvre, ledit ensemble magnétique est logé dans une gorge agencée sur la dent de ladite première roue polaire.

Il s'agit ici d'une étape particulièrement favorable pour monter préalablement ledit aimant à la dent de la première roue polaire.

Selon un autre mode de mise en oeuvre, ledit ensemble magnétique est logé dans un support disposé sur la dent de la première roue polaire et destiné à maintenir ledit ensemble magnétique dans une position déterminée, par exemple avec une agrafe..

Selon un autre mode de mise en oeuvre, le milieu d'un fond de l'évidement est directement en regard, à distance, d'une première arête dudit ensemble magnétique.

Il s'agit ici d'un agencement relatif entre l'évidement et l'aimant particulièrement favorable pour éviter la rencontre de matière entre le pétale et l'aimant eu égard à l'inclinaison du pétale. Cela favorise le passage de l'aimant dans l'évidement, entre les postions intermédiaire et repliée du pétale.

Selon un autre mode de mise en oeuvre, la plus petite distance séparant un fond de l'évidement et une première arête dudit ensemble magnétique est comprise entre 0,5 et 1,5 mm, préférentiellement 0,8 mm.

Ces dimensions offrent un bon compromis et sont particulièrement adaptés aux alternateurs et alterno-démarreurs appliqués au domaine de l'automobile.

D'autres caractéristiques et avantages ressortiront encore de la description qui faite ci-après, à titre indicatif et nullement limitatif, en référence aux dessins annexés, dans lesquels :
- la figure 1 montre une vue de dessus d'un exemple de réalisation d'un pétale selon l'art antérieur,
- la figure 2 est une vue analogue à la figure 1 montrant le pétale, notamment le passage de l'ensemble magnétique à proximité immédiate de l'évidement lorsque le pétale est dans la position intermédiaire,
- la figure 3 montre le pétale et partiellement la joue avant de l'isolant, en vue de face,
- la figure 4 est une vue de dessus en perspective montrant le montage de l'isolant dans une roue polaire avant, lorsque les pétales sont dans une position déployée,
- la figure 5 est une vue analogue à la figure 4, en éclatée, dans laquelle est également représentée la roue polaire arrière et dans laquelle les pétales sont dans une position intermédiaire,
- la figure 6 est une vue analogue à la figure 5, dans laquelle les pétales sont dans une position repliée,
- la figure 7 est une vue de côté d'un exemple de rotor conforme à l'invention.

### Descriptions d'exemples de réalisation

Dans le présent mode de réalisation, l'alternateur ou l'alterno-démarreur de véhicule automobile comporte un carter, un stator classiques et un rotor 1 ayant un arbre d'axe X-X. De façon connue en soi, le rotor 1 comporte un enroulement ou bobinage. Pour plus de précisions on se reportera par exemple au document FR 2 676 873 divulguant à la figure 1 la structure complète de l'alternateur, ici à ventilation interne, et également à la figure 1 du document FR 2 793 085 montrant le bobinage d'excitation du rotor.

Dans la description, les orientations radiale, axiale et transversale seront faites en référence à l'axe X-X de l'arbre.

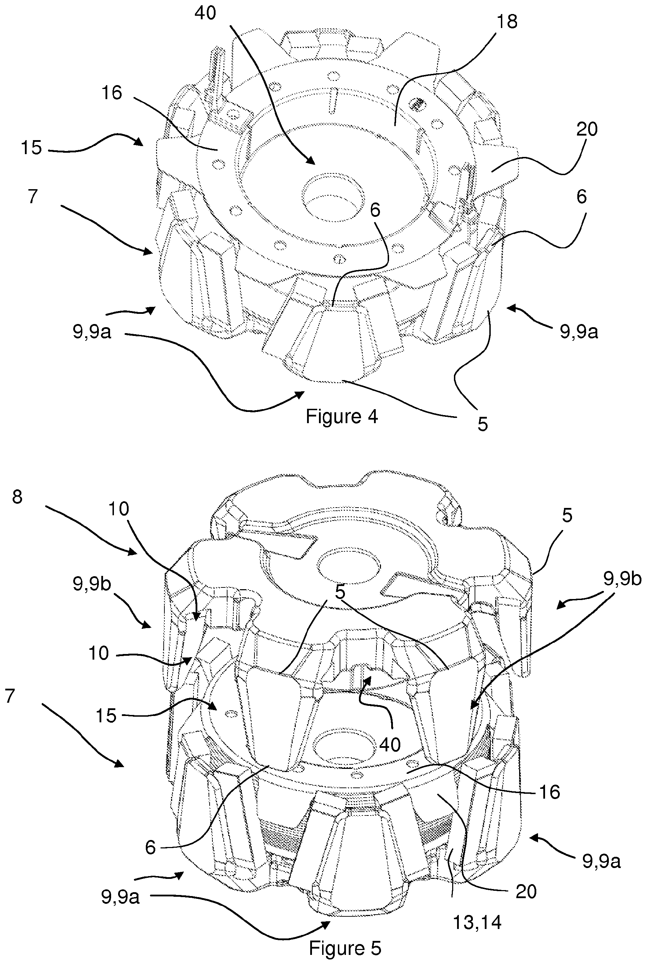

Le rotor représenté sur les figures 4 à 6, présentant un axe de symétrie axiale X-X, comporte deux roues polaires 7,8, de préférence en matériau ferromagnétique, comprenant chacune un flasque portant des saillies prolongées par des dents 9 d'orientation axiale dirigées vers la flasque de l'autre roue polaire 7,8. En particulier, ces roues polaires comportent une série de dents 9 axiales de forme globalement trapézoïdale ; c'est la partie d'orientation axiale des dents 9 qui présente cette forme globalement trapézoïdale. Chaque dent 9 s'étend axialement depuis une racine 5 vers une tête 6, en direction de l'autre roue polaire (quand le rotor est monté), de manière que chaque dent 9 d'une roue polaire 8,7, est située dans l'espace existant entre deux dents 9 consécutives de l'autre roue polaire 7,8. La périphérie externe des dents 9 délimite la périphérie externe du rotor 1 et l'entrefer entre le rotor et le stator. L'épaisseur de la partie axiale de la dent est décroissante et maximale à l'endroit de sa racine 5 et minimale à l'endroit de sa tête 6 constituant son extrémité libre.

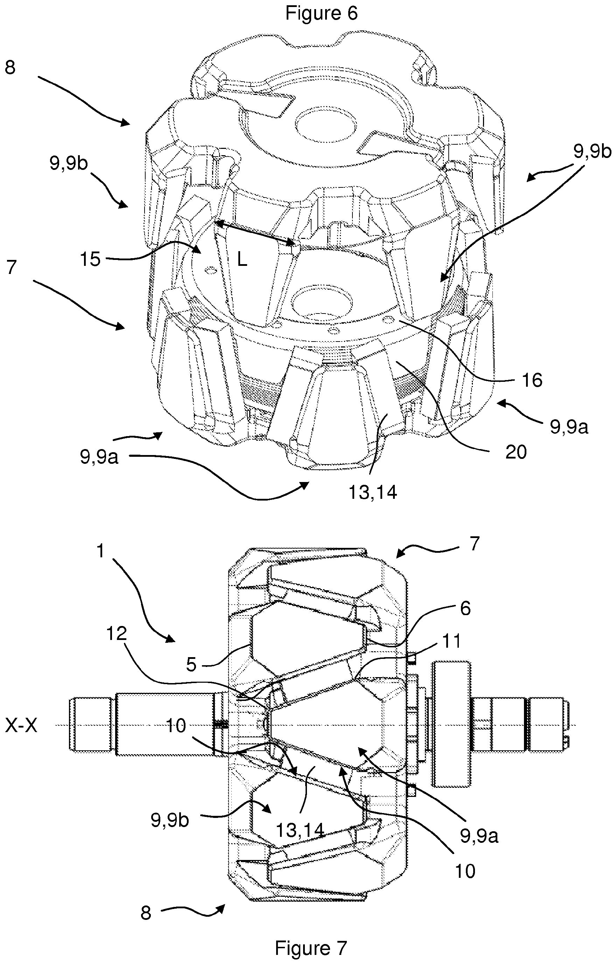

Sur les figures 5 et 6, le rotor 1 comprend une première roue polaire 7 et une seconde roue polaire 8 ayant chacune plusieurs dents 9. La première roue polaire 7 comprend une première série de griffes présentant chacune à leur périphérie externe une dent 9a d'orientation axiale et la seconde roue polaire comprend une seconde série de griffes présentant chacune à leur périphérie extérieure une dent 9b d'orientation axiale. Chacune des dents 9a, 9b présente au moins deux faces 10 latérales opposées, de préférence deux faces 10 latérales opposées. Chacune des dents 9a, 9b présente une face 10 latérale de sorte que la face 10 latérale adjacente de l'autre dent 9a, 9b est en regard. La face 10 latérale comprend des première et deuxième extrémités 11,12 opposées entre lesquelles un ensemble magnétique 13 est typiquement en contact. La première extrémité 11 est la plus proche du flasque de la roue polaire concernée et la deuxième extrémité 12 est la plus proche de l'extrémité libre, ou tête 6, de la dent 9.

L'ensemble magnétique 13, comprenant au moins un aimant 14 interpolaire, est monté entre deux dents adjacentes, respectivement 9a, 9b, appartenant à l'une et l'autre des roues polaires 7,8. L'au moins un aimant 14 peut également comprendre un autre aimant et/ou un élément magnétique qui peut être de la même matière que les roues polaires ou en acier comme décrit par exemple dans le document FR 2 918 220 auquel on se reportera. L'aimant 14 pourra être en outre associé à une laminette visible sur la figure 2 collée sur l'aimant 14 comme décrit dans le document FR 2 784 248 auquel on se reportera.

Bien entendu l'ensemble magnétique pourra également comporter au moins une cale de support réalisée en un matériau non magnétique et qui est monté sur une face d'extrémité transversale de l'aimant, et des moyens de liaison avec la cale, comme décrit dans le document FR 2 895 165 auquel on se reportera.

Préférentiellement, afin de monter l'ensemble magnétique 13 sur les griffes, il est prévu d'agencer des gorges 10a sur les faces 10 latérales des dents 9. Une procédure de montage d'un tel ensemble magnétique, entre ces première et seconde griffes est par exemple décrite dans les demandes FR 2 784 248, FR 2 918 220 et FR 2 895 165. Bien entendu l'épaisseur de l'ensemble magnétique 13 est fonction de l'épaisseur de la partie axiale d'une griffe.

L'ensemble magnétique 13 présente une forme sensiblement parallélépipédique, mais il est envisageable que cette forme soit adaptée en fonction de la conformation de l'espace interpolaire défini entre les dents, respectivement 9a et 9b. L'ensemble magnétique 13 présente, a priori, un aspect homogène avec des faces sensiblement planes.

L'ensemble magnétique 13 est compris dans l'espace interpolaire défini entre la première série de griffes de la première roue polaire et la seconde série de griffes de la seconde roue polaire.

De manière connue, le rotor peut comporter une pluralité d'ensembles magnétiques 13 s'intégrant entre une griffe de la première roue polaire 7 et une griffe de la seconde roue polaire 8. Dans le cas où des ensembles magnétiques 13 équipent les espaces interpolaires compris entre deux griffes consécutives d'une même roue polaire, sera ainsi formé une paire d'ensembles magnétiques. Le nombre de paires d'ensemble magnétique peut être inférieur ou égal au nombre de paires de pôles des roues polaires. Par suite, l'homme du métier peut agencer des ensembles magnétiques du même type que ceux précités de manière à ce qu'une série d'ensemble magnétique soit disposée entre chaque espace interpolaire défini entre les première et seconde séries de griffes.

Dans un mode de réalisation, les ensembles magnétiques peuvent être maintenu en place par des éléments de maintien en matériau magnétique et en forme de C comme décrit dans le brevet US 7 420 314. Cet élément de maintien peut notamment présenter une forme d'agrafe.

Chaque roue polaire 7,8 comprend un demi-noyau 40. Classiquement, une fois monté, le rotor comprend alors deux demi-noyau 40, un isolant 15 d'un bobinage d'excitation monté sur l'un au moins des demi-noyaux 40. L'isolant 15 se monte au moins un des demi-noyaux, entre les flasques des roues polaires 7,8.

De manière connue ce noyau peut être distinct des roues polaires 7,8, ou en variante, comme décrit dans le document FR 2 256 572, en deux parties solidaires chacune de l'une des roues polaires 7,8.

L'isolant 15 est en matière électriquement isolante, de préférence en matière plastique. Il présente un moyeu d'orientation axiale doté à au moins une de ses extrémités axiales d'une joue d'orientation transversale. L'isolant comporte un manchon cylindrique, monté sur le noyau, une joue avant 16 et une joue arrière (non représentée) à chacune des extrémités du moyeu 18.

Sur les figures 4 à 6, le manchon se monte à centrage sur le noyau du rotor, tandis que les joues avant et arrière sont destinées chacune à être adjacente, voir à venir en contact avec l'un des flasques d'une roue polaire 7,8. De préférence, un faible jeu de montage existe entre les joues avant et arrière et les flasques des roues 7,8.

Le bobinage est bobiné dans cet isolant 15, qui sert de support à ce bobinage.

Au moins une des joues avant 16 et arrière porte une pluralité de pétales 20 saillants destinées à coopérer avec la périphérie interne inclinée d'une dent 9. Préférentiellement, chaque joue avant 16 et arrière, présente des pétales 20 saillants, qui à l'état initial, c'est-à-dire à l'état libre, sont déployés et globalement d'orientation radiale et définissent une position déployée ; la figure 4 illustre cet état. Ces pétales 20 sont inclinés légèrement axialement initialement en direction de la roue polaire 7,8 concernée. Les pétales 20 sont conformés pour être retournés et repliés afin de venir en contact chacun avec la périphérie interne d'une dent 9 du rotor 1.

En vue de face du pétale 20, c'est-à-dire lorsque l'isolant 15 est concentrique à l'axe X-X, les pétales 20 présente un contour 21 globalement trapézoïdal, chaque pétale 20 étant saillant globalement radialement à l'état libre en étant incliné axialement en direction de la seconde roue polaire 8.

Classiquement, comme montré sur la figure 3, un pétale 20 présente une grande base 22, une petite base 23 et au moins deux pans 24 opposés raccordant ladite grande base 22 et ladite petite base 23 ; la grande base 22 se raccorde à la périphérie externe 25 de la joue 16, d'orientation transversale de sorte qu'elle est enracinée dans cette joue 16 ; la petite base 23 est configurée pour venir en contact avec la périphérie interne de la dent 9.

Le pétale 20, saillant globalement à l'état libre en étant incliné axialement en direction de la roue polaire 7,8, concernée (généralement la roue polaire arrière 8). L'angle d'inclinaison d'un pétale 20 à l'état libre correspondant à un état déployé, par rapport à un plan transversal, est ici d'environ 10°. Cet angle dépend des applications et permet de bien bobiner le bobinage sans être gêné par les pétales 20.

Les dimensions du pétale 20 sont conformées en fonction des dimensions de la périphérie interne inclinée et globalement de forme trapézoïdale de la dent 9. Une telle configuration améliore l'isolation électrique du bobinage par rapport à la périphérie interne de la dent 9 et le rendement du rotor 1. Typiquement, ce pétale 20 recouvre en final au moins une partie de la périphérie interne de la dent de préférence sans déborder du contour de cette périphérie. Au au moins un pan 24 parmi lesdits au moins deux pans 24 présente un évidement 27 latéral. Préférentiellement, ledit évidement 27 est plus proche de la grande base 22 que de la petite base 23.

Comme on peut le voir sur la figure 3, l'évidement 27 présente un contour qui s'étend longitudinalement. Préferentiellement, la direction du contour de l'évidement est plus inclinée vers l'axe de rotation du rotor et la joue 16 que la direction du pan 24. C'est-à-dire que comme on peut le voir sur la figure 3, dans un premier l'épaisseur de l'évidement par rapport au pan augmente linéairement lorsque l'on s'éloigne de la joue 16, puis lorsque l'on continue de s'éloigner avec la fin de l'évidement cette épaisseur se réduit. Par exemple la direction de l'évidement forme un angle compris entre 1 ° et 20° avec la direction du pan.

Dans un mode de réalisation, la grande base 22 est de plus grande dimension qu'une largeur L de la racine 5 de la dent 9 qui lui est adjacente.

Selon un mode de réalisation, au moins un aimant 14 est logé dans une gorge 10a agencée sur la dent 9 de ladite première roue polaire 7. Le document WO2011/058254 montre un exemple d'un tel procédé de montage de l'ensemble magnétique.

Selon un autre mode de réalisation, au moins un aimant 14 est logé dans un support disposé sur la dent 9 et destiné à maintenir ledit aimant 14 dans une position déterminée. Le document US6369485 montre un exemple d'un tel procédé de montage de l'ensemble magnétique 13.

Selon un mode de réalisation, l'ensemble magnétique 13 comprenant l'aimant 14 est logé dans l'espace interpolaire entre les dents 9a et les dents 9b, et est reçu dans les gorges prévues sur les faces 10 latérales de chacune des dents 9a, 9b qui sont en regard.

Par suite, l'homme du métier peut agencer des ensembles magnétiques 13 du même type que ceux précités de manière à ce qu'une série d'ensemble magnétique soit disposée entre chaque espace interpolaire défini entre les dents 9 des première et seconde roues polaires 7,8.

Classiquement, les ensembles magnétiques 13 sont montés par avance sur l'une des roues polaires 7,8, comme décrit à la page 10 du document WO 2008/031995, car les pétales 20 sont initialement déployés.

Classiquement, on usine par avance les gorges de montage des aimants, l'alésage interne et la périphérie externe des roues polaires et ce avec des outils lubrifiés sans risque de projection de copeaux sur le bobinage non présent à ce stade. Le procédé de montage consiste alors à monter l'isolant 15 avec son bobinage sur les demi-noyaux 40 des roues polaires 7, 8, puis, suite à un positionnement angulaire des deux roues par exemple à l'aide de doigts interposés de manière temporaire entre les saillies de la roue polaire concernée, on presse à l'aide d'une presse de compactage l'un contre l'autre les demi-noyaux 40 pour un bon passage du flux magnétique. Ensuite on emmanche l'arbre dans les alésages centraux des roues polaires sans destruction du positionnement angulaire des roues polaires et enfin à l'aide d'un outil on déforme la matière des roues polaires pour pénétration dans les zones de sertissage à stries de l'arbre. Ainsi on monte les ensembles magnétiques dans la gorge débouchante ou non d'une première roue polaire 7, puis on amène la deuxième roue polaire 8 dans la bonne position angulaire, sachant que l'on peut faire tourner sans difficulté cette roue. Lors de cette étape, on approche axialement la deuxième roue polaire 8 par rapport à la première roue polaire 7 de sorte que les extrémités des ensembles magnétiques 13, portés par la première roue polaire 7, peuvent venir en contact avec les pétales 20 déployés de la joue 16 associée à la deuxième roue polaire 8, qui est alors éloignée axialement de la première roue polaire 7.

Plus précisément, les têtes 6 des dents 9b de la deuxième roue polaire 8, viennent via leur périphérie interne inclinée, progressivement en contact avec les pétales 20 de la joue 16 associée à la deuxième roue polaire 8 pour retourner et donc replier, les pétales 20 de cette joue 16.

Ainsi, l'évidement 27 selon la présente invention permet d'éviter au pétale 20 de rencontrer l'ensemble magnétique 13 monté sur la première roue 7, en passant d'une position déployée à une position repliée. Il est ainsi possible de continuer à rapprocher axialement les deux roues polaires 7 et 8 l'une de l'autre puis de mettre en contact intime sous pression, lors de l'opération de compactage, les deux demi-noyaux des roues polaires 7 et 8 sans relever de difficultés de montage. Comme visible sur la figure 2, le pétale 20 n'interfère donc pas avec l'ensemble magnétique 13 de la première roue polaire 7 et on évite ainsi le bris de l'aimant ou du pétale - équipant l'ensemble magnétique 13 - qui pourrait être occasionné lorsque l'on continue à rapprocher axialement les deux roues polaires 7, 8 l'une de l'autre ou lorsque l'on met en contact intime sous pression, lors de l'opération de compactage, les deux demi noyaux des roues polaires 7, 8.

Dans un mode de réalisation montré sur les figures 4 à 6, les ensembles magnétiques 13 sont destinés à être montés d'abord sur les dents 9a de la première roue polaire. Dans cette réalisation, les gorges ayant déjà été usinées, respectivement dans les première et seconde roues polaires 7, 8 on monte l'isolant 15 équipé du bobinage d'excitation sur le demi-noyau 40 de la roue avant 7. Lors de cette étape, les pétales 20 de la joue avant 16 sont retournés et repliés progressivement par contact avec la périphérie interne inclinée des dents 9. Préférentiellement, ces pétales 20 sont plus larges circonférentiellement à l'endroit de leurs grandes bases 22 que les saillies du flasque transversal et la racine 5 d'une dent 9 de la roue avant 7.

Dans une deuxième étape, on enfile axialement les ensembles magnétiques 13 dans les gorges des dents 9a de la roue avant 7, de l'avant vers l'arrière suivant l'axe XX, les extrémités ouvertes de la gorge, du coté de la racine 5 de la dent 9a, rendant cela possible ; Dans ce cas, le mouvement est limité du fait de la présence de l'extrémité fermée de la gorge du côté de la tête 6 de la dent 9a.

Suivant un autre mode de réalisation, les gorges sont fermés à chacune de leurs extrémités ; le montage des ensembles magnétiques 13 est alors réalisé latéralement ce qui est rendu possible par l'absence de la roue arrière 8 à ce stade. Suivant un autre mode de réalisation, les ensembles magnétiques sont enfilés d'arrière en avant dans les gorges de la roue avant 7, lesquelles sont ouvertes à l'endroit de l'extrémité libre des dents du côté de la racine 5 des dents 9a.

Ensuite, on approche axialement la roue polaire arrière 8 par rapport à la roue polaire avant 7 équipées des ensembles magnétiques 13 et l'isolant 15 dans lequel est bobiné le bobinage. Lors de ce rapprochement axial, les pétales 20 de la joue avant 16 ne sont pas encore repliés ; c'est à ce moment du montage que l'évidement 27 latéral permet : le rapprochement des roues polaires 7,8 et le passage concomitant de l'ensemble magnétique équipant la roue polaire avant 7 dans l'évidement 27 du pétale 20 de la joue avant 16. Les pétales 20 peuvent donc ensuite être progressivement repliés par contact avec la périphérie interne inclinée des dents 9b de la roue polaire arrière 8.

Pour éviter cette rencontre, les modes de réalisation de l'évidement 27 qui suivent sont particulièrement favorables :
- l'évidement 27 présente une forme longitudinale inclinée par rapport à la direction générale D du pan 24,
- l'évidement 27 présente une longueur L comprise entre 2,5 et 5 mm, en son milieu M, l'évidement 27 présente une profondeur p comprise entre 0,3 et 1,5 mm.

Suivant un autre objet non revendiqué, le procédé de montage comporte les étapes suivantes :
- l'isolant 15 équipé d'un bobinage d'excitation est monté sur le demi-noyau de la première roue polaire 7,
- ledit au moins un ensemble magnétique 13 est monté sur la dent de ladite première roue polaire,
- ledit au moins un pétale 20 est retourné et replié progressivement par contact avec la périphérie interne inclinée d'une dent 9 de la seconde roue polaire 8 faisant passer ledit au moins un pétale 20 d'une position déployée à une position repliée,
- ledit au moins un ensemble magnétique 13 est mis en regard de l'évidement 27 situé sur la seconde roue polaire 8.

Dans une variante, le milieu M d'un fond 28 de l'évidement 27 est directement en regard, à distance, d'une première arête 13a dudit au moins un ensemble magnétique 13 - l'ensemble magnétique 13 étant de préférence de forme parallélépipédique.

Dans une autre variante, la plus petite distance d séparant le fond 28 de l'évidement 27 et la première arête 13a dudit au moins un ensemble magnétique 13 est comprise entre 0,5 et 1,5 mm, préférentiellement 0,8 mm.

## Revendications

1. Rotor (1) de machine électrique tournante, notamment pour un alternateur ou un alterno-démarreur de véhicule automobile, comprenant deux roues polaires (7,8), un bobinage d'excitation muni d'un isolant (15) et au moins un ensemble magnétique (13) placé entre les deux roues polaires munies chacune de dents (9a, 9b), ledit isolant comprenant une pluralité de pétales (20) **caractérisé en ce que** l'un au moins desdits pétales présente un évidement latéral (27) pour permettre le passage d'un desdits ensembles magnétiques (13) lors du montage des deux roues polaires (7,8).

2. Rotor selon la revendication précédente, dans lequel l'un de ladite pluralité de pétales (20) étant saillant et est destiné à coopérer avec la périphérie interne inclinée d'une dent (9) de la deuxième roue polaire (9).

3. Rotor (1) de machine électrique tournante selon l'une des revendications précédentes, comportant un axe de rotation (X-X) et lesdites deux roues polaires (7,8) comprenant chacune un flasque portant des saillies prolongées par lesdites dents (9) d'orientation axiale dirigées vers le flasque de l'autre roue polaire (7,8), et ledit au moins un ensemble magnétique (13) étant monté entre deux dents (9) adjacentes appartenant à l'une et l'autre des roues polaires (7,8).

4. Rotor selon l'une des revendications précédentes, comprenant un noyau entre les roues polaires (7,8), ledit isolant (15) est monté sur le noyau.

5. Rotor selon la revendication précédente, dans lequel l'isolant (15) comporte un moyeu (18), monté sur le noyau, une joue avant (16) et une joue arrière à chacune des extrémités du moyeu (18), au moins une de ces joues (16) portant ladite pluralité de pétales (20).

6. Rotor selon l'une des revendications précédentes, dans lequel le au moins un pétale (20) présente un contour (21) globalement trapézoïdal, ledit contour (21) comprenant deux pans (24) opposés non parallèles qui s'étendent vers l'extérieur de l'isolant, ledit évidement latéral (27) étant aménagé dans un de ces deux pans.

7. Rotor (1) selon la revendication 6, **caractérisé en ce que** l'évidement (27) présente une forme longitudinale ayant une direction, ladite direction étant plus inclinée que la direction du pan (24) avec laquelle elle forme un angle compris entre 1 °et 20°.

8. Rotor selon la revendication 6 ou 7 prises en dépendance de la revendication 5, dans lequel le contour présente une grande base (22) se raccordant à la périphérie externe (25) de la joue (16) et une petite base (21) configurée pour venir en contact avec ladite périphérie interne de ladite dent (9), lesdits deux pans raccordant lesdites grande base (22) et petite base (23).

9. Rotor (1) selon la revendication précédente, **caractérisé en ce que** ledit évidement (27) est plus proche de la grande base (22) que de la petite base (23).

10. Rotor (1) selon la revendication 8 ou 9, **caractérisé en ce que** ladite grande base (22) est de plus grande dimension qu'une largeur I d'une racine (5) de la dent (9) qui lui est adjacente.

11. Rotor selon l'une des revendications précédentes, dans lequel un pétale (20) de ladite pluralité de pétales étant saillant globalement radialement à l'état libre, est plaqué sur ladite bobine d'excitation lorsque lesdites deux roues polaires (7,8) sont montées.

12. Rotor (1) selon l'une des revendications précédentes, **caractérisé en ce que** l'évidement (27) présente une forme longitudinale ayant une direction et présente les dimensions suivantes :
une longueur (L) comprise entre 2,5 et 5 mm, suivant la direction de l'évidement (27),
en son milieu (M), une profondeur (p) comprise entre 0,3 et 1,5 mm.

13. Rotor (1) selon l'une des revendications précédentes, **caractérisé en ce que** ledit évidement (27) fait face à un desdits ensembles magnétiques (13).

14. Rotor (1) selon l'une des revendications précédentes, **caractérisé en ce que** ledit évidement (27) présente une certaine longueur de sorte qu'il fasse face lors de son pliage d'un pétale à une arête d'un desdits ensembles magnétiques (13).

15. Rotor (1) selon l'une des revendications précédentes, **caractérisé en ce que** ledit évidement (27) présente une certaine longueur de sorte qu'une certaine section d'un desdits ensemble magnétique (13) puisse être introduite dans l'évidement.

16. Procédé de montage d'un rotor (1) de machine électrique tournante, notamment pour un alternateur ou un alterno-démarreur de véhicule automobile, comprenant deux roues polaires (7,8) munies de dents, un bobinage d'excitation muni d'un isolant (15) et au moins un ensemble magnétique (13) placé entre les deux roues polaires, ledit isolant comprenant une pluralité de pétales (20), comportant les étapes suivantes :
- montage de l'isolant (15) muni des pétales sur la première roue polaire (7) sur laquelle est également monté ledit ensemble magnétique (13)
- montage de la seconde roue polaire (8) sur la première roue polaire, au cours duquel le pétale (20) est retourné et replié progressivement par contact avec la périphérie interne inclinée d'une dent (9b) de la seconde roue polaire (8) faisant passer ledit au moins un pétale (20) d'une position déployée à une position repliée,
**caractérisé en ce que** l'ensemble magnétique (13) est mis en regard d'un l'évidement (27) d'au moins un desdits pétales de sorte que lors de son pliage, le pétale n'accroche pas l'ensmble magnétique (13).

17. Procédé de montage selon la revendication 16, **caractérisé en ce que** ledit ensemble magnétique (13) est logé dans une gorge agencée sur la dent (9) de ladite première roue polaire (7).

18. Procédé de montage selon la revendication 17, **caractérisé en ce que** ledit ensemble magnétique (13) est logé dans un support disposé sur la dent (9) de la première roue polaire et destiné à maintenir ledit ensemble magnétique (13) dans une position déterminée.

19. Procédé de montage selon la revendication 18, **caractérisé en ce que** le milieu (M) d'un fond (28) de l'évidement (27) est directement en regard, à distance, d'une première arête (13) dudit ensemble magnétique (13).

20. Procédé de montage selon l'une des revendications 16 à 19, **caractérisé en ce que** la plus petite distance séparant un fond (28) de l'évidement (27) et une première arête (13) dudit ensemble magnétique (13) est comprise entre 0,5 et 1,5 mm, préférentiellement 0,8 mm.

## Patentansprüche

1. Rotor (1) einer rotierenden elektrischen Maschine, insbesondere für einen Wechselstromgenerator oder einen Startergenerator eines Kraftfahrzeugs, welcher zwei Polräder (7, 8), eine mit einem Isolierkörper (15) versehene Erregerwicklung und wenigstens eine magnetische Baugruppe (13), die zwischen den beiden jeweils mit Zähnen (9a, 9b) versehenen Polrädern angeordnet ist, umfasst, wobei der Isolierkörper mehrere Lappen (20) umfasst, **dadurch gekennzeichnet, dass** wenigstens einer der Lappen eine seitliche Aussparung (27) aufweist, um den Durchgang einer der magnetischen Baugruppen (13) während des Zusammenbaus der beiden Polräder (7, 8) zu ermöglichen.

2. Rotor nach dem vorhergehenden Anspruch, wobei einer der mehreren Lappen (20) vorstehend ist und dazu bestimmt ist, mit dem geneigten Innenumfang eines Zahns (9) des zweiten Polrades (9) zusammenzuwirken.

3. Rotor (1) einer rotierenden elektrischen Maschine nach einem der vorhergehenden Ansprüche, umfassend eine Drehachse (X-X) und die zwei Polräder (7, 8), die jeweils einen Flansch umfassen, der durch die Zähne (9) mit axialer Ausrichtung, die dem Flansch des anderen Polrades (7, 8) zugewandt sind, verlängerte Vorsprünge trägt, und die wenigstens eine magnetische Baugruppe (13), die zwischen zwei benachbarten Zähnen (9) angebracht ist, die zu dem einen und dem anderen der Polräder (7, 8) gehören.

4. Rotor nach einem der vorhergehenden Ansprüche, welcher einen Kern zwischen den Polrädern (7, 8) umfasst, wobei der Isolierkörper (15) an dem Kern angebracht ist.

5. Rotor nach dem vorhergehenden Anspruch, wobei der Isolierkörper (15) eine Nabe (18), die an dem Kern angebracht ist, eine vordere Wange (16) bzw. eine hintere Wange an jedem der Enden der Nabe (18) aufweist, wobei wenigstens eine dieser Wangen (16) die mehreren Lappen (20) trägt.

6. Rotor nach einem der vorhergehenden Ansprüche, wobei der wenigstens eine Lappen (20) eine im Wesentlichen trapezförmige Kontur (21) aufweist, wobei die Kontur (21) zwei einander gegenüberliegende, nicht parallele Schenkel (24) aufweist, welche sich zur Außenseite des Isolierkörpers erstrecken, wobei die seitliche Aussparung (27) in einem dieser beiden Schenkel angeordnet ist.

7. Rotor (1) nach Anspruch 6, **dadurch gekennzeichnet, dass** die Aussparung (27) eine längliche Form aufweist, die eine Richtung hat, wobei diese Richtung stärker geneigt als die Richtung des Schenkels (24) ist, mit welcher sie einen Winkel zwischen 1° und 20° bildet.

8. Rotor nach Anspruch 6 oder 7, wenn von Anspruch 5 abhängig, wobei die Kontur eine große Grundseite (22), die sich an den Außenumfang (25) der Wange (16) anschließt, und eine kleine Grundseite (21), die dafür ausgebildet ist, mit dem Innenumfang des Zahns (9) in Kontakt zu kommen, aufweist, wobei die zwei Schenkel die große Grundseite (22) und die kleine Grundseite (23) miteinander verbinden.

9. Rotor (1) nach dem vorhergehenden Anspruch, **dadurch gekennzeichnet, dass** die Aussparung (27) der großen Grundseite (22) näher als der kleinen Grundseite (23) ist.

10. Rotor (1) nach Anspruch 8 oder 9, **dadurch gekennzeichnet, dass** die große Grundseite (22) eine größere Abmessung als eine Breite 1 eines Fußes (5) des Zahns (9), welcher ihr benachbart ist, aufweist.

11. Rotor nach einem der vorhergehenden Ansprüche, wobei ein Lappen (20) der mehreren Lappen, der im freien Zustand im Wesentlichen radial vorstehend ist, an die Erregerspule gedrückt wird, wenn die zwei Polräder (7, 8) zusammengebaut sind.

12. Rotor (1) nach einem der vorhergehenden Ansprüche, **dadurch gekennzeichnet, dass** die Aussparung (27) eine längliche Form aufweist, die eine Richtung hat, und die folgenden Abmessungen aufweist:
eine Länge (L) zwischen 2,5 und 5 mm entlang der Richtung der Aussparung (27),
in ihrer Mitte (M) eine Tiefe (p) zwischen 0,3 und 1,5 mm.

13. Rotor (1) nach einem der vorhergehenden Ansprüche, **dadurch gekennzeichnet, dass** die Aussparung (27) einer der magnetischen Baugruppen (13) zugewandt ist.

14. Rotor (1) nach einem der vorhergehenden Ansprüche, **dadurch gekennzeichnet, dass** die Aussparung (27) eine gewisse Länge aufweist, derart, dass sie sich bei ihrem Umbiegen eines Lappens einer Kante einer der magnetischen Baugruppen (13) zuwendet.

15. Rotor (1) nach einem der vorhergehenden Ansprüche, **dadurch gekennzeichnet, dass** die Aussparung (27) eine gewisse Länge aufweist, derart, dass ein gewisser Abschnitt einer der magnetischen Baugruppen (13) in die Aussparung eingeführt werden kann.

16. Verfahren zum Zusammenbau eines Rotors (1) einer rotierenden elektrischen Maschine, insbesondere für einen Wechselstromgenerator oder einen Startergenerator eines Kraftfahrzeugs, welcher zwei mit Zähnen versehene Polräder (7, 8), eine mit einem Isolierkörper (15) versehene Erregerwicklung und wenigstens eine magnetische Baugruppe (13), die zwischen den beiden Polrädern angeordnet ist, umfasst, wobei der Isolierkörper mehrere Lappen (20) umfasst, die folgenden Schritte aufweisend:
- Anbringung des mit den Lappen versehenen Isolierkörpers (15) an dem ersten Polrad (7), an welchem auch die magnetische Baugruppe (13) angebracht wird,
- Anbringung des zweiten Polrades (8) an dem ersten Polrad, in deren Verlauf der Lappen (20) durch Kontakt mit dem geneigten Innenumfang eines Zahns (9b) des zweiten Polrades (8) allmählich umgedreht und umgebogen wird, wodurch bewirkt wird, dass der wenigstens eine Lappen (20) aus einer vorstehenden Position in eine umgebogene Position übergeht,
**dadurch gekennzeichnet, dass** die magnetische Baugruppe (13) in eine Position gegenüber einer Aussparung (27) wenigstens eines der Lappen gebracht wird, derart, dass der Lappen während seines Umbiegens nicht an der magnetischen Baugruppe (13) hängen bleibt.

17. Verfahren zum Zusammenbau nach Anspruch 16, **dadurch gekennzeichnet, dass** die magnetische Baugruppe (13) in einer Nut aufgenommen wird, die an dem Zahn (9) des ersten Polrades (7) ausgebildet ist.

18. Verfahren zum Zusammenbau nach Anspruch 17, **dadurch gekennzeichnet, dass** die magnetische Baugruppe (13) in einer Halterung aufgenommen wird, die an dem Zahn (9) des ersten Polrades angeordnet ist und dazu bestimmt ist, die magnetische Baugruppe (13) in einer bestimmten Position zu halten.

19. Verfahren zum Zusammenbau nach Anspruch 18, **dadurch gekennzeichnet, dass** sich die Mitte (M) eines Bodens (28) der Aussparung (27) in einem Abstand direkt gegenüber von einer ersten Kante (13) der magnetischen Baugruppe (13) befindet.

20. Verfahren zum Zusammenbau nach einem der Ansprüche 16 bis 19, **dadurch gekennzeichnet, dass** der kleinste Abstand, der einen Boden (28) der Aussparung (27) und eine erste Kante (13) der magnetischen Baugruppe (13) trennt, zwischen 0,5 und 1,5 mm liegt und vorzugsweise 0,8 mm beträgt.

## Claims

1. Rotor (1) of an electrical rotating machine, notably for an alternator or a starter alternator of a motor vehicle, including two pole wheels (7, 8), an excitation winding having an insulant (15) and at least one magnetic unit (13) placed between the two pole wheels, each of which has teeth (9a, 9b), said insulant having a plurality of petals (20), **characterized in that** at least one of said petals has a lateral recess (27) to enable the passage of one of said magnetic units (13) when assembling the two pole wheels (7, 8).

2. Rotor according to the preceding claim, in which one of said plurality of petals (20) projects and is designed to cooperate with the inner inclined periphery of a tooth (9) of the second pole wheel (9).

3. Rotor (1) of an electrical rotating machine according to one of the preceding claims, including an axis of rotation (X-X) and said two pole wheels (7, 8) each having a flange having projections extended by said teeth (9) axially oriented towards the flange of the other pole wheel (7, 8), and said at least one magnetic unit (13) being assembled between two adjacent teeth (9) belonging to one or other of the pole wheels (7, 8).

4. Rotor according to one of the preceding claims, including a core between the pole wheels (7, 8), said insulant (15) being mounted on the core.

5. Rotor according to the preceding claim, in which the insulant (15) includes a hub (18), mounted on the core, a front face (16) and a rear face at each end of the hub (18), at least one of said faces (16) bearing said plurality of petals (20).

6. Rotor according to one of the preceding claims, in which the at least one petal (20) has an overall trapezoidal contour (21), said contour (21) having two opposing non-parallel sides (24) that extend towards the outside of the insulant, said lateral recess (27) being formed in one of said two sides.

7. Rotor (1) according to Claim 6, **characterized in that** the recess (27) has a longitudinal shape with a direction, said direction being more inclined than the direction of the side (24) with which same forms an angle of between 1° and 20°.

8. Rotor according to Claim 6 or 7 when dependent on Claim 5, in which the contour has a large base (22) joined to the outer periphery (25) of the face (16) and a small base (21) designed to come into contact with said inner periphery of said tooth (9), said two sides connecting said large base (22) and said small base (23).

9. Rotor (1) according to the preceding claim, **characterized in that** said recess (27) is closer to the large base (22) than to the small base (23).

10. Rotor (1) according to Claim 8 or 9, **characterized in that** said large base (22) is larger than a width l of a root (5) of the tooth (9) adjacent thereto.

11. Rotor according to one of the preceding claims, in which a petal (20) of said plurality of petals projects overall radially in the idle state and is pressed against said excitation winding when said two pole wheels (7, 8) are assembled.

12. Rotor (1) according to one of the preceding claims, **characterized in that** the recess (27) has a longitudinal shape with a direction and has the following dimensions:
a length (L) of between 2.5 and 5 mm, in the direction of the recess (27),
a depth (p) of between 0.3 and 1.5 mm at the middle (M) of same.

13. Rotor (1) according to one of the preceding claims, **characterized in that** said recess (27) faces one of said magnetic units (13).

14. Rotor (1) according to one of the preceding claims, **characterized in that** the length of said recess (27) is such that the recess faces an edge of one of said magnetic units (13) when folded of a petal.

15. Rotor (1) according to one of the preceding claims, **characterized in that** the length of said recess (27) is such that a given section of one of said magnetic units (13) can be inserted into the recess.

16. Method for assembling a rotor (1) of an electrical rotating machine, notably for an alternator or a starter alternator of a motor vehicle, including two pole wheels (7, 8) provided with teeth, an excitation winding having an insulant (15) and at least one magnetic unit (13) placed between the two pole wheels, said insulant having a plurality of petals (20), comprising the following steps:
- assembly of the insulant (15) provided with petals on the first pole wheel (7), on which said magnetic unit (13) is also assembled,
- assembly of the second pole wheel (8) on the first pole wheel, during which the petal (20) is progressively turned and folded by contact with the inclined inner periphery of a tooth (9b) of the second pole wheel (8), moving said at least one petal (20) from a deployed position to a folded position,
**characterized in that** the magnetic unit (13) is arranged to face a recess (27) of at least one of said petals such that, when folded, the petal does not snag the magnetic unit (13).

17. Assembly method according to Claim 16, **characterized in that** said magnetic unit (13) is seated in a groove formed on the tooth (9) of said first pole wheel (7).

18. Assembly method according to Claim 17, **characterized in that** said magnetic unit (13) is seated in a support arranged on the tooth (9) of the first pole wheel that is designed to hold said magnetic unit (13) in a given position.

19. Assembly method according to Claim 18, **characterized in that** the middle (M) of a back (28) of the recess (27) is directly opposite and removed from a first edge (13) of said magnetic unit (13).

20. Assembly method according to one of claims 16 to 19, **characterized in that** the shortest distance separating a back (28) of the recess (27) and a first edge (13) of said magnetic unit (13) is between 0.5 and 1.5 mm, preferably 0.8 mm.
